# FASCICULE DE BREVET EUROPEEN

(11) **EP 1 746 287 B1**
(45) Date de publication et mention de la délivrance du brevet: **17.09.2008**
(21) Numéro de dépôt: 06117540.2
(22) Date de dépôt: 20.07.2006
(51) Int. Cl.: F04B 37/14, F04B 49/20, F04D 19/04, F04D 27/02, F04B 41/06

(54) **Pompage rapide d'enceinte avec économie d'énergie**
Pumpvorrichtung zum schnellen Evakuiieren eines Behälters mit niedrigem Energieverbrauch
Pumping system for rapid evacuation of a containment and having a low energy consumption

(30) Priorité: 20.07.2005 FR 0552250
(43) Date de publication de la demande: 24.01.2007
(73) Titulaire: Alcatel Lucent, 75008 Paris (FR)
(72) Inventeur: Rival, Jean-Luc, 74370 Villaz (FR)
(74) Mandataire: Sciaux, Edmond

(56) Documents cités:
- EP-A- 0 690 235
- EP-A- 1 213 482
- US-A- 4 699 570
- US-A- 5 165 864

## Description

La présente invention concerne les dispositifs de pompage à vide capables d'établir et de maintenir un vide approprié dans une enceinte.

L'établissement d'un vide dans une enceinte est couramment utilisé notamment dans les processus industriels de fabrication de semi-conducteurs, certaines étapes de fabrication devant être exécutées sous vide.

Dans de tels processus, des substrats de semi-conducteur sont amenés dans une chambre de chargement (lood lock) raccordée à un dispositif de pompage à vide qui abaisse la pression interne de la chambre de chargement à une valeur satisfaisante pour ensuite transférer les substrats de semi-conducteur dans une chambre de procédé dans laquelle règne le vide approprié pour la fabrication.

On comprend que chaque chargement ou déchargement de substrats nécessite de descendre puis de remonter alternativement la pression gazeuse dans la chambre de chargement, ce qui implique l'intervention fréquente du dispositif de pompage à vide.

On comprend également que l'établissement du vide dans la chambre de chargement n'est pas instantané, et que cela constitue une limite à la vitesse globale du processus de fabrication.

Cette limite est d'autant plus sensible lorsque les substrats ont une grande dimension. Tel est le cas, notamment, pour la fabrication des écrans plats de télévision ou d'affichage, la chambre de chargement ayant nécessairement le volume approprié pour contenir un ou plusieurs écrans plats.

Par exemple, actuellement, les chambres de chargement utilisées pour la fabrication des écrans plats ont des gros volumes, de l'ordre de 500 à 1 000 litres, qu'il faut donc pomper le plus rapidement possible.

La solution actuellement utilisée pour pomper rapidement de telles chambres de chargement de gros volume est d'utiliser des grosses pompes équipées avec de gros moteurs. Il en résulte que les pompes et les moteurs constituent des éléments encombrants et onéreux, qui consomment une grande quantité d'énergie.

En pratique, les dispositifs connus de pompage comprennent généralement au moins une pompe primaire, placée au refoulement de la ligne da vide, et ou moins une pompe secondaire placée à l'aspiration de la ligne de vide c'est-à-dire en sortie de l'enceinte à pomper. La pompe primaire et la pompe secondaire sont connectées en série dans le chemin d'écoulement des gaz pompés, et sont entraînées par deux moteurs électriques alimentés pour tourner à vitesse nominale.
On connaît par ailleurs, par exemple du document US-4,699,570, des dispositifs de pompage à vide comprenant au moins une pompe primaire et une pompe secondaire connectées en série et entraînées par deux moteurs électriques eux-mêmes pilotés par des moyens de commande électroniques. La pompe primaire est pilotée à vitesse constante, et l'on peut interrompre son alimentation en fin de pompage. La pompe secondaire est pilotée à vitesse régulièrement croissante au cours de la descente en pression de l'enceinte, de façon à réduire la consommation d'énergie des pompes.
Le gain en consommation d'énergie obtenu par un tel dispositif est toutefois insuffisant, notamment pour le pompage fréquent d'enceintes de grande dimension et l'invention vise à proposer des moyens permettant de réduire encore la consommation d'énergie, afin de rendre le dispositif applicable au pompage de chambres de gros volume.

Pour cela, l'invention propose un procédé de pompage à vide, pour la descente en pression d'une enceinte, comprenant au moins une pompe primaire au refoulement et une pompe secondaire à l'aspiration, connectées en série dans le chemin d'écoulement des gaz pompés et entraînées respectivement par un premier moteur électrique et par un second moteur électrique pilotés par un module électronique de contrôle permettant de modifier les vitesses des deux moteurs électriques. Selon l'invention, le procédé comprend au moins une étape, au cours de la descente en pression de l'enceinte, durant laquelle on augmente progressivement la vitesse de rotation de la pompe secondaire selon une loi de variation de vitesse de rotation de pompe secondaire, et simultanément on diminue progressivement la vitesse de rotation de la pompe primaire selon une loi de variation de vitesse de rotation de pompe primaire.

Par une telle disposition, lorsque l'enceinte est à pression atmosphérique, en début de pompage, la compression que les pompes doivent réaliser est faible, et l'on peut privilégier la vitesse de pompage en entraînant la pompe primaire à grande vitesse, l'énergie consommée étant faible, et cette énergie pouvant être réduite encore en faisant tourner la pompe secondaire à faible vitesse.
Lorsque la pression diminue, la pompe secondaire peut progressivement comprimer le gaz dans une zone de pression où la compression n'est pas consommatrice d'énergie, et la pompe secondaire peut alors engendrer un grand débit, sans consommation d'énergie excessive. On met à profit cette possibilité en augmentant progressivement la vitesse de la pompe secondaire.
Simultanément, la pompe primaire devient fortement consommatrice d'énergie, car la compression qu'elle doit produire est importante, et il est alors utile de réduire sa vitesse pour réduire l'énergie qu'elle consomme, le débit du système étant maintenu grâce à la participation accrue de la pompe secondaire.

Pour chaque volume, pour chaque débit de pompe, pour chaque période de pompage, on peut trouver une loi optimum de vitesse de chacune des pompés permettant de diminuer la consommation en énergie.
De préférence le procédé comprend les étapes suivantes:
- on augmente progressivement la vitesse de rotation de la pompe secondaire selon une loi de variation de vitesse de rotation de pompe secondaire, qui comprend une première étape de croissance lente, suivie d'une seconde étape de croissance rapide eite-même suivie d'une troisième étape de croissance moyenne, et
- on diminue progressivement la vitesse de rotation de la pompe primaire selon une loi de variation de vitesse de rotation de pompe primaire qui comprend une première étape à grande vitesse de rotation, suivie d'une seconde étape de décroissance rapide elle-même suivie d'une troisième étape à décroissance lente.
   Une telle disposition augmente encore l'économie d'énergie.

Selon un mode de réalisation avantageux, la seconde étape de croissance rapide de vitesse de pompe secondaire est simultanée avec la seconde étape de décroissance rapide de vitesse de pompe primaire.
Pour optimiser simultanément la vitesse de pompage, on peut avantageusement prévoir que la vitesse de la pompe secondaire croît depuis une vitesse minimale jusqu'à sa vitesse nominale, tandis que la vitesse de la pompe primaire est initialement à sa vitesse nominale et atteint en fin de procédure de descente en pression une vitesse réduite.
Une optimisation de la vitesse de pompage est obtenue en choisissant une pompe secondaire avec un débit nominal supérieur au débit nominal de la pompe primaire, et en choisissant le rapport des vitesses initiales des deux pompes au voisinage du ratio des débits nominaux respectifs des pompes secondaire et primaire. Ce ratio peut avantageusement être compris entre 10 et 15 environ.

Pour augmenter la rapidité de pompage, sans pour autant augmenter le débit nominal des pompes, et donc leur taille et leur volume, on peut avantageusement prévoir que la loi de variation de vitesse de la pompe primaire comprend une première étape à grande vitesse au cours de laquelle la vitesse de la pompe primaire est temporairement augmentée au-delà de sa vitesse nominale.
Par exemple, ladite première étape à grande vitesse de pompe primaire comprend une période initiale à vitesse proche de la vitesse nominale suivie d'une période de survitesse à vitesse supérieure à la vitesse nominale.
De manière générale, les lois de variation de vitesses de la pompe primaire et de la pompe secondaire sont choisies de façon à diminuer la consommation énergétique globale.

Selon un mode de réalisation de l'invention, les lois de vacation de vitesses de rotation (A, B) des pompes (1, 2) sont générées en fonction de la pression.
Selon un autre mode de réalisation de l'invention, les les lois de variation de vitesses de rotation (A, B) des pompes (1, 2) sont générées en fonction du temps écoulé.

Une économie supplémentaire d'énergie peut encore être obtenue selon l'invention en prévoyant que le dispositif de pompage à vide comprend les moyens de commande de vitesse qui, à l'issue de la procédure de descente en pression de l'enceinte, réduisent la vitesse de la pompe secondaire de sa vitesse nominale ou supérieure jusqu'à sa vitesse minimale en récupérant sous forme électrique par le second moteur électrique l'énergie cinétique de la pompe secondaire et en réinjectant cette énergie électrique par le module électronique de contrôle dans le premier moteur électrique pour l'entraînement de la pompe primaire.

D'autres objets, caractéristiques et avantages de la présente invention ressortiront de la description suivante de modes de réalisation particuliers, faite en relation avec les figures jointes, parmi lesquelles :
- la figure 1 illustre la structure générale d'un dispositif de pompage à vide selon un mode de réalisation de la présente invention ;
- la figure 2 est un diagramme temporel illustrant les variations des vitesses de pompe primaire et pompe secondaire selon un mode de réalisation de la présente invention ; et
- la figure 3 est un diagramme illustrant les variations de vitesses de pompe primaire et pompe secondaire selon un second mode de réalisation de la présente invention.

L'invention a encore pour objet un dispositif de pompage à vide, pour la descente en pression d'une enceinte, comprenant au moins une pompe primaire au refoulement et une pompe secondaire à l'aspiration, connectées en série dans le chemin d'écoulement des gaz pompés et entraînées respectivement par un premier moteur électrique et par un second moteur électrique pilotes par un module électronique de contrôle permettant de modifier les vitesses des deux moteurs électriques. Le module de contrôle a des moyens de commande de vitesse comprenant une première alimentation pilotée pour alimenter le premier moteur et une deuxième alimentation pilotée pour alimenter le second moteur, un processeur pour piloter les première et deuxième alimentations de manière à modifier les vitesses des moteurs électriques, **caractérisé en ce que** le processeur comprend une mémoire associée contenant un programme pour piloter les première et deuxième alimentations selon des lois de variation de vitesses de rotation des pompes de manière à ce que le procédé selon la revendication 1 est réalisé.

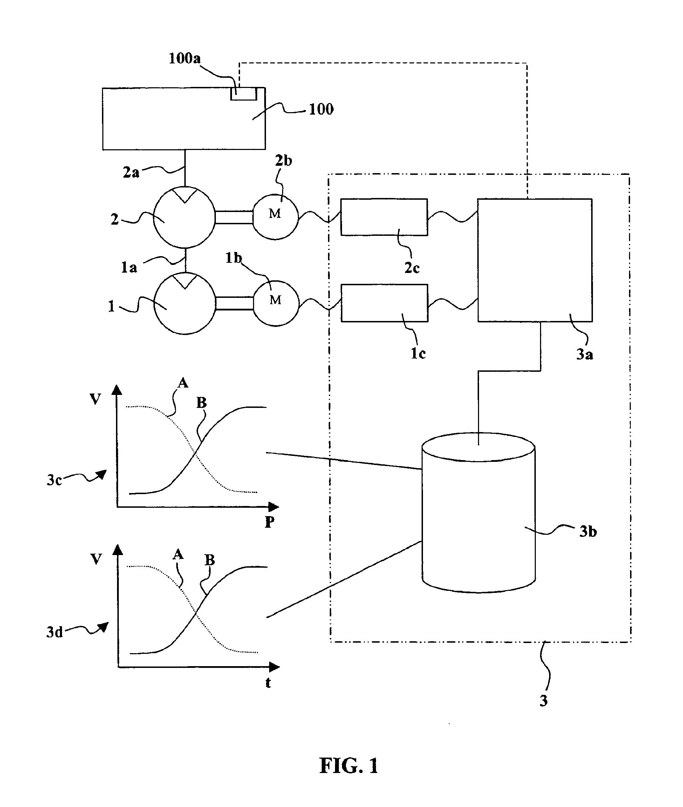

On considère tout d'abord le dispositif tel qu'illustré sur la figure 1.

On veut descendre la pression intérieure gazeuse régnant dans une enceinte 100, afin que la pression baisse le plus rapidement possible et en consommant la plus faible énergie possible.

On utilise pour cela un dispositif de pompage à vide selon l'invention, comprenant une pompe primaire 1 et une pompe secondaire 2. La pompe secondaire 2 a son aspiration 2a raccordée à l'enceinte à pomper 100, et refoule à l'aspiration 1a de la pompe primaire 1 qui elle-même refoule à la pression atmosphérique. Les pompes 1 et 2 sont ainsi connectées en série dans le chemin d'écoulement des gaz pompés.

La pompe primaire 1 est entraînée par un premier moteur électrique 1b, tandis que la pompe secondaire 2 est entraînée par un second moteur électrique 2b.

Les moteurs électriques 1b et 2b sont pilotés par un module électronique de contrôle 3 et qui commande leurs vitesses respectives.

Le module électronique de contrôle 3 comprend des moyens de commande de vitesse, comportant une première alimentation 1c pilotée pour alimenter le premier moteur 1b, une deuxième alimentation 2c pilotée pour alimenter le second moteur 2b, un processeur 3a avec une mémoire associée 3b contenant un programme pour piloter les première et seconde alimentations 1c et 2c de manière à modifier les vitesses des moteurs électriques 1b et 2b.

Le programme enregistré dans la mémoire 3b contient des lois de variation des vitesses des pompes, telles que par exemple les lois de variation V/P de vitesses en fonction de la pression illustrées par des courbes A et B sur le diagramme 3c, ou les lois de variation V/t de vitesses en fonction du temps illustrées par des courbes A et B sur le diagramme 3d.

Dans la mise en oeuvre d'un dispositif ayant des lois de variation V/t, le programme se déroule en fonction du temps en suivant l'horloge interne du processeur 3a, et en fonction des données du programme, pour reproduire les lois de variation de vitesses illustrées par les courbes A et B du diagramme 3d.

Dans un mode de réalisation comprenant des lois de variation V/P de vitesses en fonction d'une pression telle qu'illustrée sur le diagramme 3c, le dispositif comporte en outre au moins un capteur de pression 100a pour capter la pression dans l'enceinte 100 et pour produire un signal de pression envoyé au processeur 3a. Le programme peut ensuite générer les lois de variation de vitesses des pompes 1 et 2 en fonction du signal de pression, telles qu'illustrées par les courbes A et B du diagramme 3c.

Les lois de variation de vitesses A et B des pompes 1 et 2, reproduites par le programme enregistré dans la mémoire 3b, sont choisies au préalable par l'utilisateur de façon à diminuer la consommation énergétique globale que le dispositif consomme pour entraîner les pompes 1 et 2 et faire ainsi le vide dans l'enceinte 100.

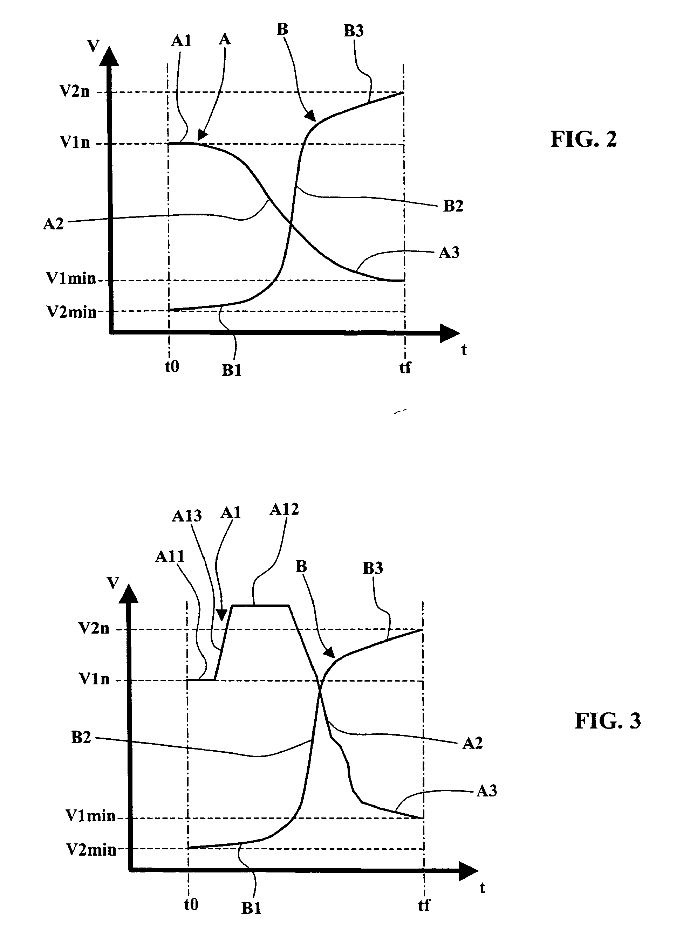

Des lois de variation de vitesses A et B conduisant à une telle économie d'énergie sont illustrées par exemple sur les figures 2 et 3.

Dans le premier mode de réalisation illustré sur la figure 2, on distingue la courbe A qui est la loi de variation de vitesse de la pompe primaire, et la courbe B qui est la loi de variation de vitesse de la pompe secondaire, entre un instant initial t0 où l'enceinte 100 se trouve à la pression atmosphérique et un instant final tf où l'on a atteint le vide recherché dans l'enceinte 100.

Initialement, à l'instant t0, la vitesse de la pompe primaire 1 est à sa vitesse nominale V1n, tandis que la vitesse de la pompe secondaire 2 est à son minimum V2min.

La loi de variation de vitesse B de la pompe secondaire 2 comprend une première étape B1 de croissance lente, suivie d'une seconde étape B2 de croissance rapide elle-même suivie d'une troisième étape B3 de croissance moyenne.

La loi de variation de vitesse A de la pompe primaire 1 comprend une première étape A1 à grande vitesse, suivie d'une seconde étape A2 de décroissance rapide elle-même suivie d'une troisième étape A3 à décroissance lente.

A l'instant final tf, la vitesse de la pompe secondaire 2 est égale à sa vitesse nominale V2n, tandis que la vitesse de la pompe primaire 1 a une valeur réduite V1 min.

On peut avantageusement choisir la structure des pompes primaire 1 et secondaire 2 ainsi que leurs vitesses initiales V1n et V2min de façon appropriée pour optimiser le débit et la consommation. Pour cela, la pompe secondaire 2 peut être choisie avec un débit nominal Q2 supérieur au débit nominal Q1 de la pompe primaire 1. Simultanément, le rapport des vitesses initiales V1n/V2min est choisi voisin du ratio K = Q2/Q1 des débits nominaux respectifs des pompes secondaire 2 et primaire 1.

Une bonne efficacité du gain d'énergie peut être obtenue avec un ratio K compris entre 10 et 15 environ.

Dans le mode de réalisation illustré sur la figure 2, la première étape à grande vitesse A1 de la loi de variation de vitesse A de la pompe primaire 1 est une étape à vitesse relativement constante et sensiblement égale à la vitesse nominale V1 n de la pompe primaire 1.

Dans le mode de réalisation illustré sur la figure 3, on retrouve des lois de variation de vitesses A de pompe primaire 1 et B de pompe secondaire 2 ayant sensiblement la même allure générale, entre l'instant initial t0 et l'instant final tf.

La différence est que, dans ce mode de réalisation de la figure 3, la loi de variation de vitesse A de la pompe primaire 1 comprend une première étape A1 à grande vitesse au cours de laquelle la vitesse de la pompe primaire 1 est temporairement augmentée au-delà de sa vitesse nominale V1 n.

Par exemple, comme illustré sur le diagramme de la figure 3, la première étape A1 à grande vitesse de pompe primaire 1 comprend une période initiale A11 à vitesse proche de la vitesse nominale V1n, suivie d'une période de survitesse A12 à vitesse supérieure à la vitesse nominale V1n, la transition entre la période initiale A11 et la période de survitesse A12 pouvant se faire par une période transitoire A13 d'assez courte durée.

Au cours de la période de survitesse A12, la vitesse de la pompe primaire 1 peut par exemple être portée à une vitesse égale à 1,5 à 2 fois la vitesse nominale. Le gain obtenu en vitesse de pompage est appréciable, et permet de réduire ensuite plus rapidement la vitesse de la pompe primaire au cours de l'étape A3, ce qui réduit encore la consommation d'énergie.

Sur les figures 2 et 3, sont illustrés des modes de réalisation dans lesquels les lois de variation de vitesses des pompes sont des lois temporelles, la vitesse étant donnée en fonction du temps. Une telle loi de variation de vitesse peut convenir lorsque l'on connaît à l'avance le volume de l'enceinte 100 à pomper. Dans ce cas, le programme génère les lois de variation de vitesses A et B des pompes 1 et 2 en fonction du temps écoulé.

Dans le cas de lois de variation de vitesses en fonction de la pression, comme sur le diagramme 3c de la figure 1, on peut piloter les pompes avec des lois de variation de vitesses ayant la même allure que les lois A et B des figures 2 ou 3, l'axe horizontal des temps étant remplacé par un axe horizontal des pressions. Ce mode de réalisation sera préféré dans le cas où des enceintes 100 de volumes différents doivent être pompées successivement avec un même dispositif de pompage.

Une fois que le vide est atteint dans l'enceinte 100, pour repartir dans un cycle de pompage suivant, il faut tout d'abord ralentir la pompe secondaire 2 jusqu'à la vitesse minimale V2min, alors qu'elle est entraînée à sa vitesse maximale qui est supérieure ou égale à sa vitesse nominale V2n. Au cours de cette étape, la pompe secondaire 2 est sous vide, et n'est donc pas freinée sensiblement par les gaz pompés. Or la pompe secondaire 2 tourne à grande vitesse, et possède une énergie cinétique élevée, ce qui rendrait très long son ralentissement naturel. Selon l'invention, on peut récupérer cette énergie cinétique sous forme électrique, et raccourcir la durée du ralentissement, en pilotant de façon appropriée le second moteur électrique 2b pour freiner la pompe secondaire 2 et en réinjectant cette énergie électrique par le module électronique de contrôle 3 dans le premier moteur électrique 1b pour l'entraînement de la pompe primaire 1.

L'invention s'applique à des dispositifs de pompage à deux pompes primaire 1 et secondaire 2, par exemple une pompe primaire 1 sèche et une pompe secondaire 2 de type ROOTS.

Les moteurs 1b et 2b peuvent être par exemple des moteurs à courant continu ou des moteurs à courant alternatif.

On pourra toutefois appliquer l'invention à des dispositifs de pompage dans lesquels la ligne de pompage comprend des pompes supplémentaires en série et/ou en parallèle avec les pompes primaire 1 et secondaire 2.

La présente invention n'est pas limitée aux modes de réalisation qui ont été explicitement décrits, mais elle en inclut les diverses variantes et généralisations qui sont à la portée de l'homme du métier.

## Revendications

1. Procédé de pompage à vide, pour la descente en pression d'une enceinte (100), au moins une pompe primaire (1) au refoulement et une pompe secondaire (2) à l'aspiration, connectées en série dans le chemin d'écoulement des gaz pompés, et entraînées respectivement par un premier moteur électrique et par un second moteur électrique pilotés par un module électronique de contrôle permettant de modifier les vitesses des deux moteurs électriques, **caractérisé en ce qu'**il comprend au moins une étape, au cours de la descente en pression de l'enceinte (100), durant laquelle on augmente progressivement la vitesse de rotation (V2) de la pompe secondaire (2) selon une loi de variation de vitesse de rotation (B) de pompe secondaire (2), et simultanément on diminue progressivement la vitesse de rotation (V1) de la pompe primaire (1) selon une loi de variation de vitesse de rotation (A) de pompe primaire (1).

2. Procédé selon la revendication 1, comprenant tes étapes suivantes :
- on augmente progressivement la vitesse de rotation (V2) de la pompe secondaire (2) selon une loi de variation de vitesse de rotation (B) de pompe secondaire (2), qui comprend une première étape (B1) de croissance lente, suivie d'une seconde étape (B2) de croissance rapide elle-même suivie d'une troisième étape (B3) de croissance moyenne, et
- on diminue progressivement la vitesse de rotation (V1) de la pompe primaire (1) selon une loi de variation de vitesse de rotation (A) dé pompe primaire (1) qui comprend une première étape (A1) à grande vitesse de rotation, suivie d'une seconde étape (A2) de décroissance rapide elle-même suivie d'une troisième étape (A3) à décroissance lente.

3. Procédé selon la revendication 2, dans lequel la seconde étape (B2) de croissance rapide de vitesse de rotation de pompe secondaire (2) est simultanée avec la seconde étape (A2) de décroissance rapide de vitesse de rotation de pompe primaire (1).

4. Procédé selon l'une des revendications 2 et 3, dans lequel la vitesse de rotation de la pompe secondaire (2) croît depuis une vitesse de rotation minimale (V2min) jusqu'à sa vitesse de rotation nominale (V2n), tandis que la vitesse de rotation de la pompe primaire (1) est initialement à sa vitesse de rotation nominale (V1n) et atteint en fin de procédure de descente en pression une vitesse de rotation réduite (V1min).

5. Procédé selon la revendication 4, dans lequel la pompe secondaire (2) est choisie avec un débit nominal (Q2) supérieur au débit nominal (Q1) de la pompe primaire (1), et le rapport des vitesses de rotation initiales (V1n/V2min) est choisi voisin du ratio (K = Q2/Q1) des débits nominaux respectifs des pompes secondaire (2) et primaire (1).

6. Procédé selon la revendication 5, dans lequel le ratio (K) des débits nominaux respectifs des pompes secondaire et primaire (1, 2) est compris entre 10 et 15 environ.

7. Procédé selon l'une des revendications précédentes, dans lequel la loi de variation de vitesse de rotation (A) de la pompe primaire (1) comprend une première étape (A1) à grande vitesse de rotation au cours de laquelle la vitesse de rotation de la pompe primaire (1) est temporairement augmentée au-delà de sa vitesse de rotation nominale (V1n).

8. Procédé selon la revendication 7, dans lequel la première étape (A1) à grande vitesse de rotation de pompe primaire (1) comprend une période initiale (A11) à vitesse de rotation proche de la vitesse de rotation nominale (V1n), suivie d'une période de survitesse (A12) à vitesse de rotation supérieure à la vitesse de rotation nominale (V1n).

9. Procédé selon l'une des revendications précédentes, dons lequel les lois de variation de vitesses de rotation (A, B) de la pompe primaire (1) et de la pompe secondaire (2) sont choisies de façon à diminuer la consommation énergétique globale.

10. Précédé selon l'une des revendications précédentes, dans lequel les lois de variation de vitesses de rotation (A, B) des pompes (1, 2) sont générées en fonction de la pression.

11. Procédé selon l'une des revendications 1 à 9, dans lequel les lois de variation de vitesses de rotation (A, B) des pompes (1, 2) sont générées en fonction du temps écoulé.

12. Dispositif de pompage à vide, pour la descente en pression d'une enceinte (100), comprenant au moins une pompe primaire (1) au refoulement et une pompe secondaire (2) à l'aspiration, connectées en série dans le chemin d'écoulement des gaz pompés et entraînées respectivement par un premier moteur éléctrique (1b) et par un second moteur électrique (2b) pilotés par un module électronique de contrôle (3) permettant de modifier les vitesses des deux moteurs électriques (1b, 2b), le module de contrôle (3) ayant des moyens de commande de vitesse (1c, 2c, 3a, 3b) comprenant une première alimentation (1c) pilotée pour alimenter le premier moteur (1b) et une deuxième alimentation (2c) pilotée pour alimenter le second moteur (2b), un processeur (3a) pour piloter les première (1c) et deuxième (2c) alimentations de manière à modifier les vitesses des moteurs électriques (1b, 2b), **caractérisé en ce que** le processeur (3a) comprend une mémoire associée (3b) contenant un programme pour piloter les première (1c) et deuxième (2c) alimentations selon des lois de variation de vitesses de rotation (A, B) des pompes (1, 2) de manière à ce que le procédé selon la revendication 1 est réalisé.

13. Dispositif selon la revendication 12, comprenant au moins un capteur de pression (100a) pour capter la pression dans l'enceinte (100) et produire un signal de pression envoyé au processeur (3a) et dans lequel le programme génère les lois de variation de vitesses de rotation (A, B) des pompes (1, 2) en fonction du signal de pression.

14. Dispositif selon la revendication 12, dans lequel le programme génère les lois de variation de vitesses de rotation (A, B) des pompes (1, 2) en fonction du temps écouté.

15. Dispositif selon l'une des revendications 12 à 14, dans lequel les moyens de commande de vitesse, à l'issue de la procédure de descente en pression de l'enceinte, réduisent la vitesse de rotation de la pompe secondaire (2) de sa vitesse de rotation nominale (V2n) ou supérieure jusqu'à sa vitesse de rotation minimale (V2min) en récupérant sous forme électrique par le second moteur électrique (2b) l'énergie cinétique de la pompe secondaire (2) et en réinjectant cette énergie électrique par le module électronique de contrôle (3) dans le premier moteur électrique (1b) pour l'entraînement de la pompe primaire (1).

## Claims

1. A vacuum pumping method for lowering pressure within a chamber (100), at least one primary pump (1) at the exhaust and one secondary pump (2) at the intake, connected serially in the flow path of the pumped gas, and respectively driven by a first electric motor and by a second electric motor controlled by an electronic control unit that makes it possible to change the speeds of both electric motors, **characterized in that** it comprises at least one step, during the lowering of the chamber's (100) pressure, during which the rotational speed (V2) of the secondary pump (2) is gradually increased based on a secondary pump (2) rotational speed variation law (B), and at the same time the rotational speed (V1) of the primary pump (1) is gradually decreased based on a primary pump (1) rotational speed variation law (A).

2. A method according to claim 1, comprising the following steps.
- The rotational speed (V2) of the secondary pump (2) is gradually increased based on a rotational speed variation law (B) for the secondary pump (2), which comprises a first step (B1) of slow increase, followed by a second step (B2) of rapid increase, followed in turn by a third step (B3) of medium increase, and
- The rotational speed (V1) of the primary pump (1) is gradually decreased based on a primary pump (1) rotational speed variation law (A), which comprises a first step (A1) at a high rotational speed, followed by a second step (A2) of rapid decrease, followed in turn by a third step (83) of slow decrease.

3. A method according to claim 2, wherein the secondary pump's (2) second step (B2) of rapidly increasing rotational speed is simultaneous with the primary pump's (1) second step (A2) of rapidly decreasing rotational speed.

4. A method according to one of claims 2 and 3, wherein the rotational speed of the secondary pump (2) increases from 13 minimum rotational speed (V2min) to its rated rotational speed (V2n), while the rotational speed of the first pump (1) is initially at its rated speed (V1n) and, at the end of the pressure-lowering procedure, reaches a lower rotational speed (V1min).

5. A method according to claim 4, wherein the secondary pump (2) is selected to have a rated flow (Q2) greater than the rated flow (Q1) of the primary pump (1), and the ratio between the initial rotational speeds (V1n/V2min) is selected to be in the vicinity of the ratio (K=Q2/Q1) between the respective rated flows of the secondary (2) and primary (1) pumps.

6. A method according to claim 5, wherein the ratio (K) of the respective rated flows of the secondary and primary pumps (2, 1) is between about 10 and 15.

7. A method according to any one of the preceding claims, wherein the rotational speed variation law (A) of the primary pump (1) comprises a first step (A1) at a high rotational speed, during which the rotational speed of the primary pump (1) is temporarily increased beyond its rated rotational speed (V1n).

8. A method according to claim 7, wherein the primary pump's (1) first step (A1) at a high rotational speed comprises an initial period (A11) at a rotational speed close to the rated rotational speed (V1n), followed by an overspend period (A12) at a rotational speed greater than the rated rotational speed (V1n).

9. A method according to one of the preceding claims, wherein the rotational speed variation laws (A, B) of the primary pump (1) and the secondary pump (2) are chosen in such a way as to reduce overall energy consumption.

10. A method according to one of the preceding claims, wherein the rotational speed variation laws (A, B) of the pumps (1, 2) are generated as a function of pressure.

11. A method according to one of the preceding claims, wherein the rotational speed variation laws (A, B) of the pumps (1, 2) are generated as a function of the time that has passed.

12. A vacuum pumping device for lowering pressure within a chamber (100), comprising at least one primary pump (1) at the exhaust and one secondary pump (2) at the intake, connected serially in the flow path of the pumped gas, and respectively driven by a first electric motor (1b) and by a second electric motor (2b) controlled by an electronic control module (3) that makes it possible to change the speeds ef both electric motors (1b, 2b), said control module (3) having speed control means (1c, 2c, 3a, 3b) comprising a first power unit (1c) controlled in such a way as to power the first motor (1b) and a second power unit (2c) controlled in such a way as to power the second motor (2b), as well as a processor (3a) to control the first (1c) and second (2c) power units in such a way as change the speeds of the electric motors (1b, 2b), **characterized in that** the processor (3a) comprises an associated memory (3b) containing a program for controlling the first (1c) and second (2c) power units in accordance with the rotational speed variation laws (A, B) of the pumps (1, 2), in a manner that performs the method according to claim 1.

13. A device according to claim 12, comprising at least one pressure sensor (100a) to sense the pressure within the chamber (100) and produce a pressure signal that is sent to the processor (3a), wherein the program generates the rotational speed variation laws (A, B) of the pumps (1, 2) as a function of the pressure signal.

14. A device according to claim 12, wherein the program generates the rotational speed variation laws (A, B) of the pumps (1, 2) as a function of the time that has passed.

15. A device according to one of the claims 12 to 14, wherein the speed control means, upon the completion of the procedure of lowering the chamber's pressure, reduce the rotational speed of the secondary pump (2) from its rated rotational speed (V2n) or higher to its minimum rotational speed (V2min) by retrieving the kinetic energy of the secondary pump (2) in electrical form via second electric motor (2b) and by reinserting this electrical energy via the electronic control module (3) into the first electric motor (1b) for driving the primary pump (1).

## Patentansprüche

1. Vakuumpumpverfahren zum Senken des Druckes eines Behälters (100), welches mindestens eine Primärpumpe (1) an der Druckseite und eine Sekundärpumpe (2) an der Saugseite in Reihenschaltung im Abströmpfad der gepumpten Gase, die jeweils durch einen ersten Elektromotor und einen zweiten Elektromotor angetrieben werden, welche von einem elektronischen Steuermodul gesteuert werden, um das Verändern der Geschwindigkeit der beiden Elektromotoren zu ermöglichen, umfasst, **dadurch gekennzeichnet, dass** es bei abnehmendem Druck des Behälters (100) mindestens eine Etappe umfasst, während welcher die Drehzahl (V2) der Sekundärpumpe (2) schrittweise entsprechend einem Gesetz für die Drehzahländerung (B) der Sekundärpumpe (2) erhöht und die Drehzahl (V1) der Primärpumpe (1) gleichzeitig stufenweise entsprechend einem Gesetz für die Drehzahländerung (A) der Primärpumpe (1) gesenkt wird.

2. Verfahren nach Anspruch 1, folgende Etappen umfassend:
- Die Drehzahl (V2) der Sekundärpumpe (2) wird stufenweise entsprechend einem Gesetz für die Drehzhländerung (B) der Sekundärpumpe (2) erhöht, einschließlich einer ersten Etappe (B1) mit langsamer Steigerung, gefolgt von einer zweiten Etappe (B2) mit schneller Steigerung, wiederum gefolgt von einer dritten Etappe (B3) mit durchschnittlicher Steigerung, und
- Die Drehzahl (V1) der Primärpumpe (1) wird stufenweise entsprechend einem Gesetz für die Drehzahländerung (A) der Primärpumpe (1) gesenkt, einschließlich einer ersten Etappe (A1) mit hoher Drehzahl, gefolgt von einer zweiten Etappe (A2) mit schneller Senkung, wiederum gefolgt von einer dritten Etappe (A3) mit durchschmittlicher Senkung.

3. Verfahren nach Anspruch 2, wobei die zweite Etappe (B2) der schnellen Steigerung der Drehzahl der Sekundärpumpe (2) simultan mit der zweiten Etappe (A2) der schnelien Senkung der Drehzahl der Primärpumpe (1) erfolgt.

4. Verfahren nach einem der Ansprüche 2 und 3, wobei die Drehzahl der Sekundärpumpe (2) ausgehend von einer minimalen Drehzahl (V2min) bis zu ihrer nominalen Drehzahl (V2n) ansteigt, während die Drehzahl der Primärpumpe (1) ursprünglich die nominale Drehzahl (V1n) ist und am Ende des Vorgangs der Drucksenkung eine reduzierte Drehzahl (V1min) erreicht.

5. Verfahren nach Anspruch 4, wobei die Sekundärpumpe (2) mit einer nominalen Fördermenge (Q2), welcher höher ist als die nominale Fördermenge(Q1) der Primärpumpe (1), gewählt wird, und das gewählte Verhältnis der ursprünglichen Drehzahlen (V1n/V2min annähernd dem Verhältnis (K = Q2/Q1) der jeweiligen nominalen Fördermengen der Sekundärpumpe (2) und der Sekundärpumpe (1) entspricht.

6. Verfahren nach Anspruch 5, wobei das Verhältnis K der jeweiligen nominalen Fördermengen der Sekundärpumpe und der Primärpumpe (1, 2) ungefähr zwischen 10 und 15 beträgt.

7. Verfahren nach einem der vorstehenden Ansprüche, wobei das Gesetz für die Drehzahländerung (A) der Primärpumpe (1) eine erste Etappe (A1) bei hoher Drehzahl umfasst, während welcher die Drehzahl der Primärpumpe (1) zeitweise über ihre nominale Drehzahl (V1n) hinaus gesteigert wird.

8. Verfahren nach Anspruch 7, wobei die erste Etappe (A1) bei hoher Drehzahl der Primärpumpe (1) eine ursprüngliche Phase (A11) mit einer Drehzahl, welche annähernd der nominalen Drehzahl (V1n) entspricht, umfasst, gefolgt von einer Phase der Übergeschwindigkeit (A12), während welcher die Drehzahl höher ist als die nominale Drehzahl(V1n).

9. Verfahren nach einem der vorstehenden Ansprüche, wobei die Gesetze für die Drehzahländerung (A, B) der Primärpumpe (1) und der Sekundärpumpe (2) so gewählt werden, dass der Gesamtenergieverbrauch reduziert wird.

10. Verfahren nach einem der vorstehenden Ansprüche, wobei die Gesetze für die Drehzahländerung (1, B) der Pumpen (1, 2) entsprechend dem Druck erzeugt werden.

11. Verfahren nach einem der Ansprüche 1 bis 9, wobei die Gesetze für die Drehzahländerung (A, B) der Pumpen (1, 2) entsprechend der vergangenen Zeit erzeugt werden.

12. Vakuumpumpvorrichtung zum Senken des Druckes eines Behälters (100), welches mindestens eine Primärpumpe (1) an der Druckseite und eine Sekundärpumpe (2) an der Saugseite in Reihenschaltung im Abströmpfad der gepumpten Gase, jeweils durch einen ersten Elektromotor (1b) und einen zweiten Elektromotor (2b) angetrieben, welche von einem elektronischen Steuermodul (3) gesteuert werden, um das Verändern der Geschwindigkeit der beiden Elektromotoren (1b, 2b) zu ermöglichen; umfasst, wobei das Steuermodul (3) mit Mitteln zum Steuern der Geschwindigkeit (1c, 2c, 3a, 3b) ausgestattet ist, welche eine erste Versorgungseinheit (1c) zur Versorgung des ersten Motors (1b) und eine zweite Versorgungseinheit (2c) zur Versorgung des zweiten Motors (2b) und einen Prozessor (3a) zur Steuerung der ersten (1c) und der zweiten (2c) Versorgungseinheit umfasst, um eine Veränderung der Drehzahlen der Elektromotoren (1b, 2b), **dadurch gekennzeichnet, dass** der Prozessor (3a) einen zugeordneten Speicher (3b) umfasst, welcher ein Programm zum Steuern der ersten (1c) und zweiten (2c) Versorgungseinheiten entsprechend den Gesetzen für die Drehazhländerung (A, B) der Pumpen (1, 2) enthält, um das Verfahren nach Anspruch 1 auszuführen.

13. Vorrichtung nach Anspruch 12, welche mindestens einen Druckfühler (100a) umfasst, um den Druck im Behälter (100) zu messen und ein an den Prozessor (3a) gesendetes Drucksignal zu erzeugen, wobei das Programm die Gesetze für die Drehzahländerung (A, B) der Pumpen (1, 2) entsprechend dem Drucksignal erzeugt.

14. Vorrichtung nach Anspruch 12. wobei das Programm die Gesetze für die Drehzahländerung (A, B) der Pumpen (1, 2) entsprechend der vergangenen Zeit erzeugt.

15. Vorrichtung nach einem der Ansprüche 12 bis 14, wobei die Mittel für die Drehzahlsteuerung im Anschluss an die Drucksenkung des Behälters die Drehzahl der Sekundärpumpe (2) von ihrer nominalen (V2n) oder höheren Drehzahl bis auf ihre minimale (V2min) Drehzahl senken und dabei die kinetische Energie der Sekundärpumpe (2) in Form von elektrischer Energie zurück gewonnen und durch das elektronische Steuermodul (3) in den ersten Elektromotor (1b) für den Antrieb der Primärpumpe (1) eingespeist wird.
